# EUROPEAN PATENT SPECIFICATION

(11) **EP 4 638 261 B1**
(45) Date of publication and mention of the grant of the patent: **18.11.2026**
(21) Application number: 23844112.5
(22) Date of filing: 22.12.2023
(51) Int. Cl.: B63G 8/00, H04B 10/80, H04B 13/02, G08B 13/18

(54) **SITUATIONAL AWARENESS AND SECURITY DURING SUBSEA INTERVENTIONS**
SITUATIONSBEWUSSTSEIN UND -SICHERHEIT BEI UNTERWASSEREINGRIFFEN
CONNAISSANCE DE LA SITUATION ET SÉCURITÉ PENDANT DES INTERVENTIONS SOUS-MARINES

(30) Priority: 23.12.2022 GB 202219704
(43) Date of publication of application: 29.10.2025
(73) Proprietor: Subsea 7 Limited, Sutton, Surrey SM2 5BN (GB)
(72) Inventor: JAMIESON, James Andrew, Aberdeenshire AB23 8TS (GB)
(74) Representative: Keltie LLP
(86) International application number: PCT/GB2023/053373
(87) International publication number: WO 2024/134225

(56) References cited:
- WO-A1-2015/189224
- US-A1- 2005 232 638
- US-A1- 2008 205 892
- US-B2- 10 871 567

## Description

This invention relates to the challenges of monitoring and controlling interventions required to assess, maintain or repair subsea assets. For example, robotic or remotely operated vehicles commonly perform tasks on hydrocarbon production installations in the subsea oil and gas industry and on renewable energy equipment installed underwater. The invention is particularly concerned with the challenges of situational awareness and security in that context, and especially with the difficulty of optically monitoring the environment of a subsea structure such as a wellhead or a manifold.

The prior art comprises numerous proposals for conveying optical information underwater or for conveying information underwater by optical means. For example, WO 2014/186034 discloses an example of underwater data communication in which light is emitted and received by transceivers on respective sides of a data link.

WO 2011/026233 describes an optical transceiver designed for adverse environments such as in subsea applications.

US 9031413 describes a subsea optical communication protocol and exemplifies how two optical emitter/receivers can communicate underwater.

CN 111193541 discusses the use of a pattern of lights on a node communication device to facilitate alignment of an underwater vehicle with an underwater wireless communication device in order to increase the efficiency of optical signals between the vehicle and the communication device.

US 2008/205892 discloses a communication zone formed by an array of beacons that can transmit and receive optical signals to and from a submersible craft. The spacing of the beacons means that, as the craft moves through the communication zone, it is always in communication with at least one beacon.

US 9231708 explains how to limit interference between underwater optical communication systems and light emitted from secondary sources deployed nearby, such as work lights or beacons.

US 2005/232638 describes how a submersible vehicle can initiate optical communication with an underwater probe as it approaches, and how a squealer device may be used to help maintain optical communication between the submersible and the probe.

In US 8179279, a subsea production tree or wellhead is monitored and controlled by wireless systems that could include a radio frequency modem, a sonar device, an infrared communication device, a light emitting diode or an optical modem. Such devices may use radio frequency waves, acoustic waves or electromagnetic waves.

In WO 2014/035749, an optical detector is positioned close to a wellhead to detect leaks using infrared light but there is no teaching that the detector could be used for communication.

WO2015/189224 A1, in turn, discloses a method and system for detecting an incursion in relation to a subsea asset, comprising sensing means in association with the asset to produce an indication in response to the presence of an object.

Water near the seabed tends to be muddy and turbid, presenting the problem that particles in the water can obscure vision and absorb and scatter optical wireless communication signals. Optical devices, such as cameras or lasers, have limited performance in this environment. A drawback of underwater optical communication is therefore limited range and unpredictability: the signal can often be interrupted, even if it is conveyed by a laser.

WO 2020/251364 notes this problem and attempts to address it by erecting a barrier to reduce entry of debris into a volume of seawater around items of subsea equipment. However, it is not possible to control turbidity entirely in that way. For example, turbidity will inevitably arise from the ingress and deposition of fine sediment that can then be disturbed by the impeller wash of a subsea vehicle.

Whilst perception and communication of optical information is difficult underwater, it remains attractive to use optical information wherever possible. Optical information differs from acoustic information derived from conventional acoustic means such as sonar. In addition to giving a different perspective, optical information can be richer and more informative than sonar information and optical data transmission is possible at much greater bandwidth than acoustic transmission.

Consequently, optical communication is sometimes used in combination with acoustic detection or communication to convey more information at short range. One typical example is when docking an autonomous underwater vehicle (AUV) into a subsea garage or station. Whilst acoustic means are generally used for positioning, optical beacons may be used for docking. For example, a laser beam guides an AUV in CN 105182991.

Optical information, particularly when enabling a video signal to be displayed, is much easier and quicker than acoustic information for human operators to interpret. This allows for immediate, real-time interpretation and reaction by personnel on a vessel or in a control room onshore. Speed and accuracy of response to rapidly changing circumstances can be crucial, especially if an incursion or an attempted intervention is unexpected and therefore unplanned. This applies all the more if an incursion ever takes place with malign intent because subsea infrastructure could be damaged or the state of valves, switches or other control elements could be altered covertly. Additionally, the desirability of high-bandwidth data communication combined with the difficulty of transmitting data underwater has led to reliance on above-surface communications such as 4G or 5G systems and satellite communication systems. However, such systems can suffer from data latency and could be vulnerable to hacking, jamming or other disruption.

Against this background, the invention resides in a method for monitoring the environment of a subsea structure. The method according to the invention is defined in claim 1.

Before responding to the detection, a determination may be made as to whether the detection is false. If the detection is determined to be false, the control system can be returned to a monitoring mode to continue monitoring of the transmission zone.

Data communication may be effected between the master control and the vehicle via the wireless communication link. For example, a live video feed can be provided from the vehicle to the master control via the wireless communication link. Moreover, data communication may be effected between the master control and a vehicle control via the wireless communication link and the vehicle in turn. In that way, the wireless communication link can be used to communicate in real time between personnel located at the master control and at the vehicle control, for example via a live video feed carried by the wireless communication link. Additionally, data can be communicated via the wireless communication link to control the vehicle from the master control.

An alert at the master control could elicit the response of effecting optical data communication between the structure and the vehicle via the wireless communication link.

The transmission zone being monitored may extend from an intervention panel of the structure. For example, two or more transmission zones could extend from an intervention panel of the structure. In that case, the transmission zones can overlap with each other laterally.

Where an underwater vehicle is present, light may be emitted from the vehicle into a transmission zone extending from the vehicle. Incursion of that light into a transmission zone extending from the structure could then be detected. In response, optical data communication can be effected between the structure and the vehicle via the wireless communication link across the overlapping transmission zones extending respectively from the structure and from the vehicle. At least one of the transmission zones may flare outwardly from a transmitter, a receiver or a transceiver.

Correspondingly, the inventive concept also embraces a system for monitoring the environment of a subsea structure. The system according to the invention is defined in claim 12.

The receiver could be mounted on or beside at least one intervention panel of the structure. For example, the structure may comprise two or more faces, each fitted with an intervention panel and at least one receiver. In some embodiments, at least two receivers could be mounted on or beside an intervention panel of the structure. Such receivers could face away from the structure in outwardly divergent orientations.

The system may further comprise at least one optical transmitter on the structure for transmitting an optical data signal into the transmission zone. The or each transmitter could, for example, be implemented with the at least one receiver in at least one transceiver.

The structure may be configured to relay data between the control system and the transmitter and receiver of the structure. The control system may be in communication with, or could comprise an interface for communication with, a remote master control.

The system may further comprise an underwater vehicle that is fitted with at least one optical transmitter for emitting light into an optical transmission zone extending into water from the transmitter. The vehicle can also be fitted with a receiver for receiving light from the transmission zone extending from the transmitter of the vehicle. Again, the transmitter and the receiver of the vehicle are apt to be implemented together in a transceiver.

Where a vehicle is in communication with a vehicle control, the system may be configured to relay data between the vehicle control and the transmitter and receiver of the vehicle. Where the structure is in communication with a remote master control, the system may be configured to relay data between the remote master control and the vehicle control via a wireless optical data link extending between the structure and the vehicle. The remote master control and the vehicle control could be be equipped with two-way real-time video communication systems that are operable via the optical data link. The vehicle may also be controllable from the remote master control via the optical data link.

In summary, the invention addresses challenges of subsea intervention, security and situational awareness. It presents alternatives to omnidirectional, free space optical transmission through water and to ROV- and vessel-deployed systems that rely upon mobile telecommunications and satellite communications, if available.

The invention can use the control network of a subsea production system (SPS) for live communications with an underwater vehicle such as an underwater inspection drone (UID) or a remotely operated vehicle (ROV) operating close to a subsea asset such as a tree atop a wellhead. More generally, data can be passed between a control room and at-sea asset. For this purpose, the invention employs comms connectors in the SPS, located in control rooms and on a UID, ROV or other vehicle in the field, and creates a through-water link between the vehicle and the asset via short-range focused optical communications that eliminate crosstalk. Each area of interest, such as each intervention panel of a subsea asset, may be equipped with one or more optical transceivers and a comms connector. Each vehicle may also be also be equipped with an optical transceiver and comms connectors.

Systems of the invention solve various problems, including that of real-time communications between a UID or other vehicle and a control room located onshore or otherwise above the surface. More generally, the invention enables direct communications between an offshore UID or ROV system and an onshore control room. The invention also mitigates the risk of blind spots or crosstalk between optical systems for execution of intervention tasks.

In addition, systems of the invention can sense the presence of light in the vicinity of a subsea asset and sound an alarm in a control room if the presence of light at that location is unexpected, for example if no intervention was planned. Also, the invention does not rely upon surface telecommunications networks, such as 4G or 5G systems, or upon satellite communications, all of which are subject to challenges of cyber security and data latency. By detecting risks of unauthorised intervention and by being resistant to cyber attacks, the invention provides an effective security system for subsea assets.

In embodiments of the invention, a device or system for monitoring the environment of a subsea structure such as a wellhead or a manifold comprises: at least one side panel comprising at least one optical receiver and transmitter able to detect light at short range, within a zone of vision that may be generally conical or pyramidal; and at least one onboard control system, wherein the control system is configured to trigger a response when light is detected by the optical receiver. That response is or comprises one of, but is not limited to: sending an alarm message to a remote control room via a monitoring system of the subsea structure; going back to a passive reception mode; and activating a transmission mode. The system further comprises an interface to exchange information with a monitoring system of the subsea structure. Such an interface can comply with electrical, acoustic or optical signal emission.

The system may comprise enough panels to cover substantially the whole space immediately around the subsea structure, preferably with a substantial continuous perimeter of detection. The zone of vision of each panel may, for example, be up to 90° wide and 5m long, creating a perimeter around the structure with a spacing or radius of up to 5m from the structure. There may be two or more optical transmitters and/or receivers or transceivers on each panel, and the zones of vision of each could overlap with those of any neighbouring transmitters, receivers or transceivers.

The system may also comprise at least one optical receiver/transmitter mounted on a subsea vehicle, which could for example be an unmanned underwater vehicle (UUV) or an autonomous underwater vehicle (AUV) in addition to a UID or an ROV. The optical receiver/transmitter can exchange optical signals with an onboard control system of the structure and/or of the vehicle, and could be embodied in a panel or other attachment fitted to the vehicle.

Correspondingly, embodiments of the invention implement a method to monitor the environment of a subsea structure. That method comprises providing a monitoring device or system by mounting on the subsea structure at least one side panel that has at least one optical receiver and transmitter able to detect light at short range, within a zone of vision. The side panel or panels are connected to at least one onboard control system and an interface of the control system is connected to the monitoring system of the subsea structure.

Initially, the monitoring system is placed in a passive mode in which light emanating from outside the structure can be detected by the at least one optical receiver. Whenever such light is detected, the control system is triggered to generate a response. That response is or comprises one of, but is not limited to: sending an alarm message to a remote control room via the monitoring system of the subsea structure; reverting to the passive reception mode; or activating a transmission mode to emit and receive optical signals within the zone of vision of an active panel.

In summary, therefore, the environment around a subsea structure such as a wellhead or a manifold may be monitored by a system for observing one or more optical transmission zones that extend into water, for example beyond intervention panels of the structure. On detecting incursion of a light source such as an underwater vehicle into a transmission zone, the system can respond by alerting a remote master control room via a preinstalled control system that controls the structure, such as a subsea production system acting on a wellhead or manifold
If the light source is an underwater vehicle, optical data communication can be effected between the structure and the vehicle via a wireless communication link across an active transmission zone. The wireless communication link can effect data communication between the master control room and the vehicle and between the master control room and a vehicle control room, via the vehicle.

In order that the invention may be more readily understood, reference will now be made, by way of example, to the accompanying drawings in which:
Figure 1a is a schematic plan view of an underwater vehicle approaching a structure on the seabed, showing transmission zones of light emitted by the vehicle and the structure;
Figure 1b corresponds to Figure 1a but shows the vehicle now close enough to the structure for light emitted from the vehicle to be within a transmission zone of the structure, and for optical data transmission to be established between the structure and the vehicle in consequence;
Figure 2 is a system diagram exemplifying how the structure and the vehicle interact with each other and with their respective control systems;
Figure 3 is a system diagram exemplifying how the structure and the vehicle communicate with each other and with their respective control systems; and
Figure 4 is a flow diagram showing a mode of operation of the systems shown in Figures 2 and 3.

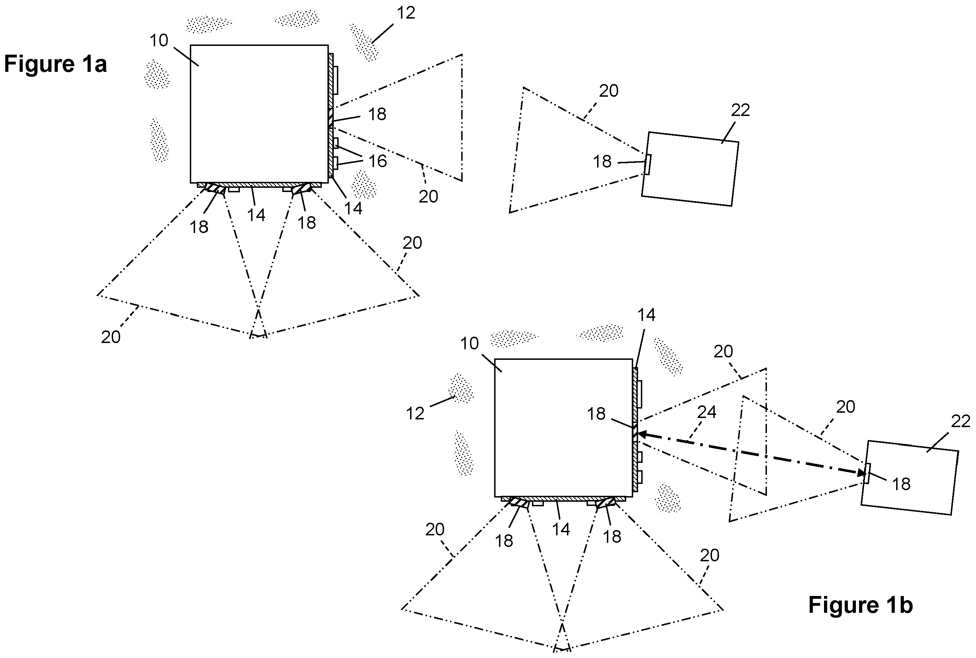

Referring firstly to Figures 1a and 1b of the drawings, a subsea structure 10 such as a wellhead tree is shown in plan view installed on the seabed 12. The structure 10 has a faceted shape, in this example cuboidal, defining faces that are apt to support respective control or intervention panels 14 as shown. Each intervention panel 14 comprises various control elements 16 such as switches, indicators or actuators for auxiliary operation of valves within the structure 10.

In accordance with the invention, the structure 10 further comprises at least one optical transceiver 18 that can detect, emit and receive light in visible and/or other wavelengths. Of course, separate transmitters and receivers could be provided instead of being integrated into transceivers 18, to similar effect.

Each transceiver 18 can emit light into, and receive light from, an outwardly-flared or splayed frusto-conical or frusto-pyramidal volume extending into the water surrounding the structure 10. That volume defines a transmission zone 20 of detection or of vision of incoming optical signals, or conversely an effective range of emission of outgoing optical signals.

The flare angle of the transmission zone 20 is determined by the design of the transceiver 18, for example up to about 90° in total or about 45° each side of a central axis orthogonal to an outward face of the transceiver 18. Conversely, the outward extent of the transmission zone 20 is determined to a considerable degree by the turbidity of the water. In practical terms, the outward extent of the transmission zone 20, being the range of reliable visibility or detection or transmission of optical signals from the structure 10, may be about 5m from the related transceiver 18.

Conveniently, the optical transceivers 18 may be mounted on the intervention panels 14 as shown. One intervention panel 14 shown in Figures 1a and 1b has one transceiver 18 and the other intervention panel 14 shown in those drawings has a pair of transceivers 18. The transmission zones 20 of the paired transceivers 18 can intersect or overlap with each other, as shown, to create a continuous peripheral boundary in combination with each other. In this example, the single transceiver 18 emits in a direction orthogonal to the plane of the associated intervention panel 14 whereas the paired transceivers 18 are oppositely inclined relative to the plane of their intervention panel 14 to maximise their combined angular coverage with minimal overlap between their transmission zones 20.

Figures 1a and 1b also show an underwater vehicle 22 such as an ROV. The vehicle 22 also supports a transceiver 18 that is capable of transmitting optical signals to the transceivers 18 of the structure 10 or of receiving optical signals from those transceivers 18. Similarly, therefore, the transceiver 18 of the vehicle 22 can emit light into, and receive light from, an outwardly-flared frusto-conical or frusto-pyramidal volume extending into the water ahead of the vehicle 22. Again, that volume defines a transmission zone 20 of detection or of vision of incoming optical signals, or conversely an effective range of emission of outgoing optical signals from the vehicle 22.

The vehicle 22 is shown approaching the structure 10 in Figure 1b but the transmission zone 20 radiating from the vehicle 22 has not yet encountered or overlapped with the transmission zone 20 radiating from the opposed face of the structure 10. Conversely, Figure 1b shows the vehicle 22 now close enough to the structure 10 for its transmission zone 20 to overlap with the transmission zone 20 radiating from the opposed face of the structure 10. Consequently, optical signals emitted from the vehicle 22 are now detectable and receivable via the relevant transceiver 18 of the structure. In accordance with the invention, as will be explained, the system can respond by enabling optical data transmission via a two-way wireless data link 24 extending across the overlapping transmission zones 20 between the opposed transceivers 18 of the structure 10 and the vehicle 22. This short-range optical communication between the opposed transceivers 18 is stable, reliable, high in bandwidth and mitigates the risk of crosstalk.

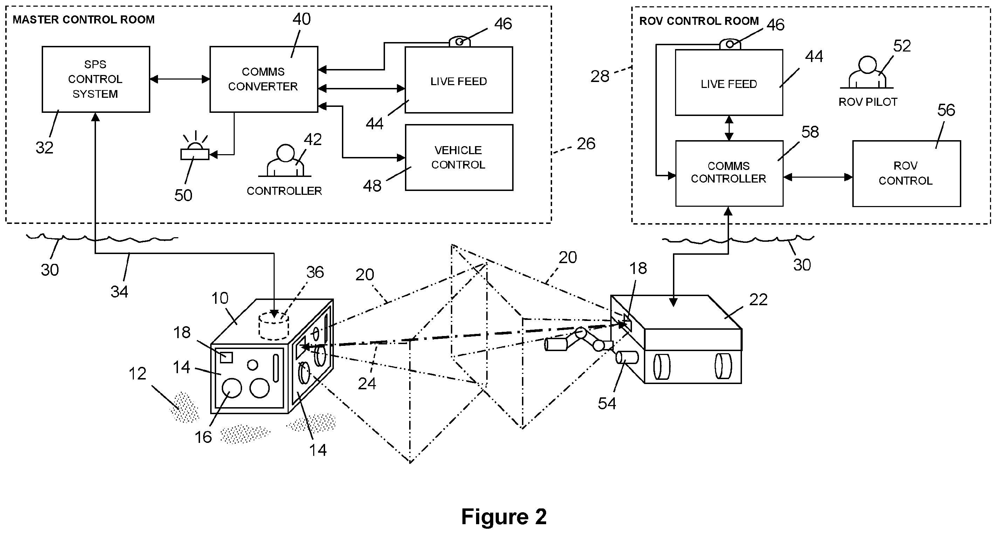

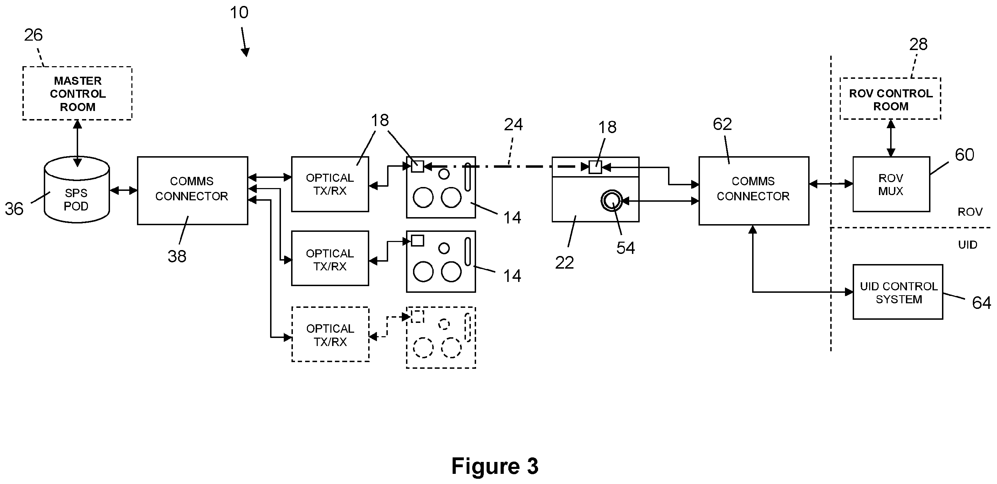

Turning next to Figures 2 and 3, these drawings show how the structure 10 and the vehicle 22, exemplified here by an ROV, are controlled respectively by a master control room 26 and an ROV control room 28, both being at respective locations above the surface 30 such as onshore or aboard a vessel. Figure 2 shows that the master control room 26 comprises or is connected to an SPS control system 32 that communicates via a power and data link 34 with an SPS pod 36 hosted by the structure 10. As shown in Figure 3, the SPS pod 36 interfaces via a comms connector 38 with respective transceivers 18 of the intervention panels 14 of the structure 10. There could be one, two or more such intervention panels 14 on the structure 10.

Returning to the master control room 26 as shown in Figure 2, the SPS control system 32 communicates with a comms converter 40 that communicates, in turn, with equipment required to support and interface with one or more human controllers 42 supervising the master control room 26. That equipment comprises a live video feed 44 accompanied by a web cam 46, a vehicle control 48 and an alarm 50.

The video feed 44 and webcam 46 enable the controller 42 to communicate with an ROV pilot 52 in the ROV control room 28, who is similarly equipped with a corresponding video feed 44 and webcam 46. Thus, the ROV pilot 52 has live communications with the controller 42 or other operators in the master control room 26.

The alarm 50 is activated to alert the controller 42 that a vehicle 22 in the vicinity of the structure 10 has been detected approaching the structure 10, causing the transmission zones 20 of the structure 10 and the vehicle 22 to overlap as shown in Figure 1b. The vehicle control 48 enables the controller 42 to assume control of the vehicle 22 if required. For this purpose, the video feeds 44 can also display a video signal from a camera 54 of the vehicle 22. More generally, operators in the master control room 26 can control a UID, employ live video, effect human-in-the-loop control or remote-pilot an ROV.

The alarm 50 can also alert the controller 42 of any other light detected within the transmission zones 20 of any of the transceivers 18 of the structure 10, thus detecting light emitted from another vehicle or, in sufficiently shallow water, from a diver in the vicinity.

The ROV pilot 52 in the ROV control room 28 can control the vehicle 22 via an ROV control 56 that interfaces with the vehicle 22 via a comms controller 58, an ROV multiplexer 60 and a comms connector 62. If the vehicle 22 is instead a UID, a UID control system 64 interfaces with the vehicle 22 via the comms connector 62 as shown in Figure 3.

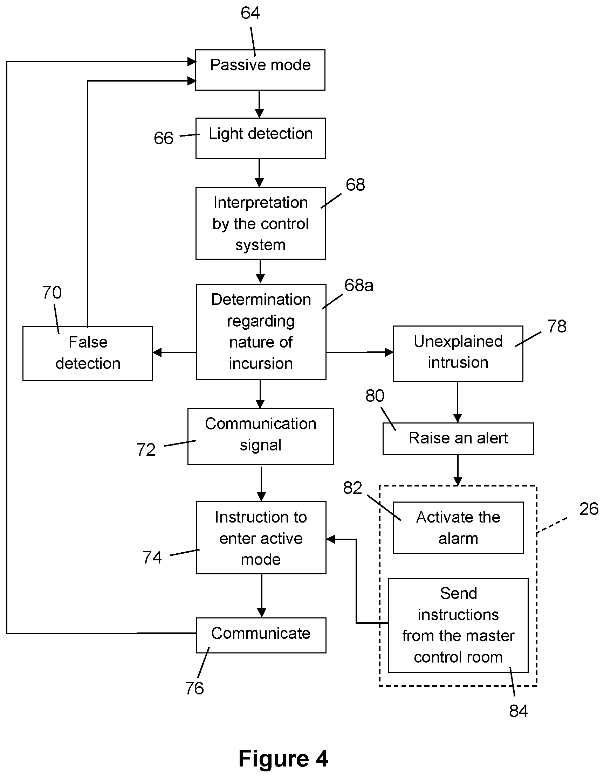

Turning finally to Figure 4, the SPS control system 32 is initially in a passive standby mode at 64, in which the transceivers 18 of the structure 10 are enabled to detect light within their respective transmission zones 20. When such a detection is made at 66, the system 32 interprets the detected light signal at 68 and makes a determination at 68a regarding the nature of the incursion into the transmission zone 20. For example, the system 32 may conclude that the light signal is spurious, for example if the signal is faint or transient, is not maintained or repeated or does not brighten over time. In that case, the system 32 flags a false detection at 70 and returns to the passive mode at 64.

Where the system 32 concludes that the light signal represents an incursion into a transmission zone 20, it then considers whether the light signal arises from an expected or an unexpected incursion. For example, the system 32 may previously have been updated to expect a scheduled intervention by a vehicle 22 around a particular time, or prior authority for the incursion may have been requested and granted. In that case, a communication signal issued or received at 72 leads to an instruction from the system 32 for the transceiver 18 of the structure 10 to enter an active mode at 74, whereupon optical communication is established at 76 between the structure 10 and the vehicle 22. When communication at 76 is complete, the system reverts to the passive mode at 64.

If the system 32 concludes at 78 that the incursion is unexpected, it raises an alert at 80, in this case by activating the alarm 50 in the master control room 26 at 82. Operators in the master control room 26 can then consider what to do before issuing instructions to the system 32 at 84 accordingly. For example, the incursion may in fact be authorised or operators in the master control room 26 may, if the vehicle 22 is an ROV, wish to communicate with the ROV control room 28 via the optical data link 24 to determine the reason for the incursion, to warn the ROV pilot 52 or to assume control of the vehicle 22. In that case, the instruction to the system 32 may be to enter the active mode at 74 before effecting optical communication between the structure 10 and the vehicle 22 at 76.

## Claims

1. A method of monitoring the environment of a subsea structure (10), the method comprising:
monitoring at least one optical transmission zone (20) extending into water from the structure (10);
detecting incursion of a light source into the at least one transmission zone (20);
determining if the incursion into the at least one transmission zone (20) is (i) unexpected or (ii) expected or authorised; and
responding to the detection by: in case (i) alerting a remote master control via a control system (32) that controls the structure (10); and in case (ii), if the light source is an underwater vehicle (22), effecting optical data communication between the structure (10) and the vehicle (22) via a wireless communication link (24, 34) across the at least one transmission zone (20).

2. The method of Claim 1, comprising passively monitoring the at least one transmission zone (20).

3. The method of Claim 1 or Claim 2, comprising determining whether the detection is false before responding to the detection, and optionally, if the detection is determined to be false, returning the control system (32) to a monitoring mode for continued monitoring of the at least one transmission zone (20).

4. The method of any preceding claim, comprising effecting data communication between the master control and the vehicle (22) via the wireless communication link (24, 34), and optionally providing a live video feed from the vehicle (22) to the master control via the wireless communication link (24, 34).

5. The method of Claim 4, comprising effecting data communication between the master control and a vehicle control (48) via the wireless communication link (24, 34) and the vehicle (22).

6. The method of Claim 5, comprising using the wireless communication link (34) to communicate in real time between personnel located at the master control and at the vehicle control (48), and optionally providing a live video feed between said personnel via the wireless communication link (24, 34).

7. The method of Claim 5 or Claim 6, comprising using data communicated via the wireless communication link (24, 34) to control the vehicle (22) from the master control.

8. The method of any preceding claim, comprising responding to an alert at the master control by effecting optical data communication between the structure (10) and the vehicle (22) via the wireless communication link (24).

9. The method of any preceding claim, comprising monitoring the at least one transmission zone (20) extending from at least one intervention panel (14) of the structure (10), and optionally wherein at least two of the transmission zones (20) extend from an intervention panel (14) of the structure (10), and optionally wherein the at least two transmission zones (20) overlap with each other laterally.

10. The method of any preceding claim, comprising emitting light from the vehicle (22) into another transmission zone (20) extending from the vehicle (22); detecting incursion of that light into the at least one transmission zone (20) extending from the structure (10); and effecting optical data communication between the structure (10) and the vehicle (22) via the wireless communication link (24) across the transmission zones (20) that extend from the structure (10) and from the vehicle (22).

11. The method of any preceding claim, wherein the or each transmission zone (20) flares outwardly from a transmitter, receiver or transceiver (18).

12. A system for monitoring the environment of a subsea structure (10), the system comprising:
at least one optical receiver on the structure (10) for receiving light from an optical transmission zone (20) extending into water from the receiver and for detecting incursion of a light source into that transmission zone (20); and
a control system (32) configured to determine if the incursion into the transmission zone is (i) unexpected or (ii) expected or authorised and to control the structure (10) and responsive to the receiver to respond to said detection by: in case (i) raising an alert; and in case (ii), if the light source is an underwater vehicle (22), effecting optical data communication between the structure (10) and the vehicle (22) via a wireless communication link (24, 34) across that transmission zone (20).

13. The system of Claim 12, wherein the system comprises the subsea structure (10) and wherein the at least one receiver is mounted on or beside at least one intervention panel (14) of the structure (10).

14. The system of Claim 13, wherein the structure comprises two or more faces, each fitted with an intervention panel (14) and at least one receiver.

15. The system of Claim 13 or Claim 14, wherein at least two receivers are mounted on or beside an intervention panel (14) of the structure (10), and wherein the receivers optionally face away from the structure (10) in outwardly divergent orientations.

16. The system of any of Claims 12 to 15, further comprising at least one optical transmitter for transmitting an optical data signal into the transmission zone (20), and optionally wherein the or each transmitter is implemented with the at least one receiver in at least one transceiver (18).

17. The system of Claim 16, wherein the system comprises the subsea structure (10) and wherein the structure (10) is configured to relay data between the control system (32) and the transmitter and receiver of the structure (10).

18. The system of any of Claims 12 to 17, wherein the system comprises a remote master control, and wherein the control system (32) is in communication with, or comprises an interface for communication with, the remote master control.

19. The system of any of Claims 12 to 18, further comprising an underwater vehicle (22) fitted with at least one optical transmitter for emitting light into an optical transmission zone (20) that extends into water from the transmitter, and wherein the vehicle (22) is optionally further fitted with a receiver for receiving light from the transmission zone (20) extending from the transmitter of the vehicle (22), and optionally wherein the transmitter and the receiver of the vehicle are implemented together in a transceiver (18).

20. The system of Claim 19, wherein the system further comprises a vehicle control (48), and wherein the vehicle (22) is in communication with the vehicle control (48) and is configured to relay data between the vehicle control (48) and the transmitter and receiver of the vehicle (22).

21. The system of Claim 20, wherein the system further comprises a remote master control, and wherein the structure (10) is in communication with the remote master control and the system is configured to relay information between the remote master control and the vehicle control (48) via a wireless optical data link (24, 34) extending between the structure (10) and the vehicle (22), and wherein the remote master control and the vehicle control (48) are optionally equipped with two-way real-time video communication systems that are operable via the optical data link (24, 34).

22. The system of Claim 21, wherein the vehicle (22) is controllable from the remote master control via the optical data link (24, 34).

## Patentansprüche

1. Verfahren zum Überwachen der Umgebung einer Unterseestruktur (10), wobei das Verfahren Folgendes umfasst:
Überwachen mindestens einer optischen Sendezone (20), die sich von der Struktur (10) in Wasser erstreckt;
Erfassen des Eindringens einer Lichtquelle in die mindestens eine Sendezone (20);
Bestimmen, ob das Eindringen in die mindestens eine Sendezone (20) (i) unerwartet oder (ii) erwartet oder genehmigt ist; und
Reagieren auf die Erfassung durch: im Fall (i) Warnen einer entfernten Leitsteuerung über ein Steuersystem (32), das die Struktur (10) steuert; und im Fall (ii), falls die Lichtquelle ein Unterwasserfahrzeug (22) ist, Bewirken von optischer Datenkommunikation zwischen der Struktur (10) und dem Fahrzeug (22) über eine drahtlose Kommunikationsverbindung (24, 34) über die mindestens eine Sendezone (20) hinweg.

2. Verfahren nach Anspruch 1, umfassend das passive Überwachen der mindestens einen Sendezone (20).

3. Verfahren nach Anspruch 1 oder Anspruch 2, umfassend das Bestimmen, ob die Erfassung falsch ist, bevor auf die Erfassung reagiert wird, und optional, falls bestimmt wird, dass die Erfassung falsch ist, Zurückversetzen des Steuersystems (32) in einen Überwachungsmodus zur fortgesetzten Überwachung der mindestens einen Sendezone (20).

4. Verfahren nach einem der vorangehenden Ansprüche, umfassend das Bewirken von Datenkommunikation zwischen der Leitsteuerung und dem Fahrzeug (22) über die drahtlose Kommunikationsverbindung (24, 34) und optional Bereitstellen einer Live-Videoeingabe von dem Fahrzeug (22) zu der Leitsteuerung über die drahtlose Kommunikationsverbindung (24, 34).

5. Verfahren nach Anspruch 4, umfassend das Bewirken von Datenkommunikation zwischen der Leitsteuerung und einer Fahrzeugsteuerung (48) über die drahtlose Kommunikationsverbindung (24, 34) und das Fahrzeug (22).

6. Verfahren nach Anspruch 5, umfassend das Verwenden der drahtlosen Kommunikationsverbindung (34) zur Kommunikation in Echtzeit zwischen an der Leitsteuerung und an der Fahrzeugsteuerung (48) befindlichem Personal und optional Bereitstellen einer Live-Videoeingabe zwischen dem Personal über die drahtlose Kommunikationsverbindung (24, 34).

7. Verfahren nach Anspruch 5 oder Anspruch 6, umfassend das Verwenden von über die drahtlose Kommunikationsverbindung (24, 34) übermittelten Daten zum Steuern des Fahrzeugs (22) von der Leitsteuerung aus.

8. Verfahren nach einem der vorangehenden Ansprüche, umfassend das Reagieren auf eine Warnung an der Leitsteuerung durch Bewirken optischer Datenkommunikation zwischen der Struktur (10) und dem Fahrzeug (22) über die drahtlose Kommunikationsverbindung (24).

9. Verfahren nach einem der vorangehenden Ansprüche, umfassend das Überwachen der mindestens einen sich von mindestens einem Eingriffsfeld (14) der Struktur (10) erstreckenden Sendezone (20) und wobei sich optional mindestens zwei der Sendezonen (20) von einem Eingriffsfeld (14) der Struktur (10) erstrecken und wobei sich optional die mindestens zwei Sendezonen (20) einander seitlich überschneiden.

10. Verfahren nach einem der vorangehenden Ansprüche, umfassend das Aussenden von Licht von dem Fahrzeug (22) in eine andere sich von dem Fahrzeug (22) erstreckende Sendezone (20); Erfassen des Eindringens dieses Lichts in die mindestens eine sich von der Struktur (10) erstreckende Sendezone (20); und Bewirken von optischer Datenkommunikation zwischen der Struktur (10) und dem Fahrzeug (22) über die drahtlose Kommunikationsverbindung (24) über die sich von der Struktur (10) und von dem Fahrzeug (22) erstreckenden Sendezonen (20) hinweg.

11. Verfahren nach einem der vorangehenden Ansprüche, wobei sich die oder jede Sendezone (20) von einem Sender, Empfänger oder Sendeempfänger (18) nach außen aufweitet.

12. System zum Überwachen der Umgebung einer Unterseestruktur (10), wobei das System Folgendes umfasst:
mindestens einen optischen Empfänger an der Struktur (10) zum Empfangen von Licht von einer sich von dem Empfänger in Wasser erstreckenden optischen Sendezone (20) und zum Erfassen des Eindringens einer Lichtquelle in diese Sendezone (20); und
ein Steuersystem (32), das dazu konfiguriert ist, zu bestimmen, ob das Eindringen in die Sendezone (i) unerwartet oder (ii) erwartet oder genehmigt ist und die Struktur (10) zu steuern und auf den Empfänger reagierend auf die Erfassung durch Folgendes zu reagieren: im Fall (i) Absetzen einer Warnung; und im Fall (ii), falls die Lichtquelle ein Unterwasserfahrzeug (22) ist, Bewirken von optischer Datenkommunikation zwischen der Struktur (10) und dem Fahrzeug (22) über eine drahtlose Kommunikationsverbindung (24, 34) über diese Sendezone (20) hinweg.

13. System nach Anspruch 12, wobei das System die Unterseestruktur (10) umfasst und wobei der mindestens eine Empfänger an oder neben mindestens einem Eingriffsfeld (14) der Struktur (10) angebracht ist.

14. System nach Anspruch 13, wobei die Struktur zwei oder mehr Seitenflächen umfasst, die jeweils mit einem Eingriffsfeld (14) und mindestens einem Empfänger ausgestattet sind.

15. System nach Anspruch 13 oder Anspruch 14, wobei mindestens zwei Empfänger an oder neben einem Eingriffsfeld (14) der Struktur (10) angebracht sind und wobei die Empfänger optional in nach außen auseinanderlaufenden Ausrichtungen von der Struktur (10) weg weisen.

16. System nach einem der Ansprüche 12 bis 15, ferner umfassend mindestens einen optischen Sender zum Senden eines optischen Datensignals in die Sendezone (20) und wobei optional der oder jeder Sender mit dem mindestens einen Empfänger in mindestens einem Sendeempfänger (18) implementiert ist.

17. System nach Anspruch 16, wobei das System die Unterseestruktur (10) umfasst und wobei die Struktur (10) dazu konfiguriert ist, Daten zwischen dem Steuersystem (32) und dem Sender und dem Empfänger der Struktur (10) weiterzuleiten.

18. System nach einem der Ansprüche 12 bis 17, wobei das System eine abgesetzte Leitsteuerung umfasst und wobei das Steuersystem (32) mit der abgesetzten Leitsteuerung in Kommunikation steht oder eine Schnittstelle zur Kommunikation damit umfasst.

19. System nach einem der Ansprüche 12 bis 18, ferner umfassend ein Unterwasserfahrzeug (22), das mit mindestens einem optischen Sender zum Aussenden von Licht in eine sich von dem Sender in Wasser erstreckende optische Sendezone (20) ausgestattet ist, und wobei das Fahrzeug (22) optional ferner mit einem Empfänger zum Empfangen von Licht von der sich von dem Sender des Fahrzeugs (22) erstreckenden Sendezone (20) ausgestattet ist und wobei optional der Sender und der Empfänger des Fahrzeugs zusammen in einem Sendeempfänger (18) implementiert sind.

20. System nach Anspruch 19, wobei das System ferner eine Fahrzeugsteuerung (48) umfasst und wobei das Fahrzeug (22) mit der Fahrzeugsteuerung (48) in Kommunikation steht und dazu konfiguriert ist, Daten zwischen der Fahrzeugsteuerung (48) und dem Sender und dem Empfänger des Fahrzeugs (22) weiterzuleiten.

21. System nach Anspruch 20, wobei das System ferner eine abgesetzte Leitsteuerung umfasst und wobei die Struktur (10) mit der abgesetzten Leitsteuerung in Kommunikation steht und das System dazu konfiguriert ist, Informationen zwischen der abgesetzten Leitsteuerung und der Fahrzeugsteuerung (48) über eine sich zwischen der Struktur (10) und dem Fahrzeug (22) erstreckende drahtlose optische Datenverbindung (24, 34) weiterzuleiten, und wobei die abgesetzte Leitsteuerung und die Fahrzeugsteuerung (48) optional mit Zweiwege-Echtzeit-Videokommunikationssystemen ausgerüstet sind, die über die optische Datenverbindung (24, 34) betreibbar sind.

22. System nach Anspruch 21, wobei das Fahrzeug (22) von der abgesetzten Leitsteuerung aus über die optische Datenverbindung (24, 34) steuerbar ist.

## Revendications

1. Procédé de surveillance de l'environnement d'une structure sous-marine (10), le procédé comprenant :
surveiller au moins une zone de transmission optique (20) s'étendant dans l'eau à partir de la structure (10) ;
détecter la pénétration d'une source lumineuse dans l'au moins une zone de transmission (20) ;
déterminer si la pénétration dans l'au moins une zone de transmission (20) est (i) imprévue ou (ii) prévue ou autorisée ; et
réagir à la détection : dans le cas (i) en alertant une unité principale de commande à distance par le biais d'un système de commande (32) qui commande la structure (10) ; et dans le cas (ii), si la source lumineuse est un véhicule sous-marin (22), en établissant une communication optique de données entre la structure (10) et le véhicule (22) par le biais d'une liaison de communication sans fil (24, 34) dans l'au moins une zone de transmission (20).

2. Procédé selon la revendication 1, comprenant le fait de surveiller passivement l'au moins une zone de transmission (20).

3. Procédé selon la revendication 1 ou la revendication 2, comprenant le fait de déterminer si la détection est fausse avant de réagir à la détection et, éventuellement, s'il est déterminé que la détection est fausse, le fait de remettre le système de commande (32) en mode de surveillance pour poursuivre la surveillance de l'au moins une zone de transmission (20).

4. Procédé selon l'une quelconque des revendications précédentes, comprenant le fait d'établir une communication de données entre l'unité principale de commande et le véhicule (22) par le biais de la liaison de communication sans fil (24, 34) et, éventuellement, le fait de transmettre à l'unité principale de commande un flux vidéo en direct depuis le véhicule (22) par le biais de la liaison de communication sans fil (24, 34).

5. Procédé selon la revendication 4, comprenant le fait d'établir une communication de données entre l'unité principale de commande et une unité de commande de véhicule (48) par le biais de la liaison de communication sans fil (24, 34) et du véhicule (22).

6. Procédé selon la revendication 5, comprenant le fait d'utiliser la liaison de communication sans fil (34) pour une communication en temps réel entre des personnels se trouvant au niveau de l'unité principale de commande et au niveau de l'unité de commande de véhicule (48) et, éventuellement, le fait de transmettre un flux vidéo en direct entre lesdits personnels par le biais de la liaison de communication sans fil (24, 34).

7. Procédé selon la revendication 5 ou la revendication 6, comprenant le fait d'utiliser des données transmises par le biais de la liaison de communication sans fil (24, 34) pour commander le véhicule (22) depuis l'unité principale de commande.

8. Procédé selon l'une quelconque des revendications précédentes, comprenant le fait de réagir à une alerte au niveau de l'unité principale de commande en établissant une communication optique de données entre la structure (10) et le véhicule (22) par le biais de la liaison de communication sans fil (24).

9. Procédé selon l'une quelconque des revendications précédentes, comprenant le fait de surveiller l'au moins une zone de transmission (20) s'étendant depuis au moins un panneau d'intervention (14) de la structure (10), et dans lequel, éventuellement, au moins deux zones de transmission (20) s'étendent depuis un panneau d'intervention (14) de la structure (10), et dans lequel, éventuellement, les au moins deux zones de transmission (20) se chevauchent latéralement.

10. Procédé selon l'une quelconque des revendications précédentes, comprenant le fait d'émettre de la lumière depuis le véhicule (22) dans une autre zone de transmission (20) s'étendant à partir du véhicule (22) ; le fait de détecter la pénétration de cette lumière dans l'au moins une zone de transmission (20) s'étendant à partir de la structure (10) ; et le fait d'établir une communication optique de données entre la structure (10) et le véhicule (22) par le biais de la liaison de communication sans fil (24) dans les zones de transmission (20) qui s'étendent à partir de la structure (10) et à partir du véhicule (22).

11. Procédé selon l'une quelconque des revendications précédentes, dans lequel la ou chaque zone de transmission (20) s'étend en s'élargissant vers l'extérieur à partir d'un émetteur, d'un récepteur ou d'un émetteur-récepteur (18).

12. Système de surveillance de l'environnement d'une structure sous-marine (10), le système comprenant :
au moins un récepteur optique sur la structure (10) destiné à recevoir de la lumière provenant d'une zone de transmission optique (20) s'étendant dans l'eau à partir du récepteur et destiné à détecter la pénétration d'une source lumineuse dans cette zone de transmission (20) ; et
un système de commande (32) conçu pour déterminer si la pénétration dans la zone de transmission est (i) imprévue ou (ii) prévue ou autorisée et pour commander la structure (10) et, en réponse aux informations du récepteur, pour réagir à ladite détection : dans le cas (i) en déclenchant une alerte ; et dans le cas (ii), si la source lumineuse est un véhicule sous-marin (22), en établissant une communication optique de données entre la structure (10) et le véhicule (22) par le biais d'une liaison de communication sans fil (24, 34) dans cette zone de transmission (20).

13. Système selon la revendication 12, le système comprenant la structure sous-marine (10) et l'au moins un récepteur étant installé sur ou à côté d'au moins un panneau d'intervention (14) de la structure (10).

14. Système selon la revendication 13, dans lequel la structure comprend au moins deux faces, chacune équipées d'un panneau d'intervention (14) et d'au moins un récepteur.

15. Système selon la revendication 13 ou la revendication 14, dans lequel au moins deux récepteurs sont installés sur ou à côté d'un panneau d'intervention (14) de la structure (10), et dans lequel les récepteurs sont éventuellement dirigés à l'opposé de la structure (10) dans des orientations divergeant vers l'extérieur.

16. Système selon l'une quelconque des revendications 12 à 15, comprenant, en outre, au moins un émetteur optique destiné à émettre un signal optique de données dans la zone de transmission (20), et dans lequel, éventuellement, l'émetteur ou chaque émetteur est combiné avec l'au moins un récepteur sous la forme d'au moins un émetteur-récepteur (18).

17. Système selon la revendication 16, le système comprenant la structure sous-marine (10) et la structure (10) étant conçue pour acheminer des données entre le système de commande (32) et l'émetteur et le récepteur de la structure (10).

18. Système selon l'une quelconque des revendications 12 à 17, le système comprenant une unité principale de commande à distance, et le système de commande (32) communiquant avec, ou comprenant une interface lui permettant de communiquer avec, l'unité principale de commande à distance.

19. Système selon l'une quelconque des revendications 12 à 18, comprenant, en outre, un véhicule sous-marin (22) équipé d'au moins un émetteur optique destiné à émettre de la lumière dans une zone de transmission optique (20) qui s'étend dans l'eau à partir de l'émetteur, et dans lequel le véhicule (22) est éventuellement également équipé d'un récepteur destiné à recevoir de la lumière provenant de la zone de transmission (20) s'étendant à partir de l'émetteur du véhicule (22), et dans lequel, éventuellement, l'émetteur et le récepteur du véhicule sont combinés sous la forme d'un émetteur-récepteur (18).

20. Système selon la revendication 19, le système comprenant, en outre, une unité de commande de véhicule (48), et le véhicule (22) communiquant avec l'unité de commande de véhicule (48) et étant conçu pour acheminer des données entre l'unité de commande de véhicule (48) et l'émetteur et le récepteur du véhicule (22).

21. Système selon la revendication 20, le système comprenant, en outre, une unité principale de commande à distance, et la structure (10) communiquant avec l'unité principale de commande à distance et le système étant conçu pour acheminer des informations entre l'unité principale de commande à distance et l'unité de commande de véhicule (48) par le biais d'une liaison optique de données sans fil (24, 34) s'étendant entre la structure (10) et le véhicule (22), et l'unité principale de commande à distance et l'unité de commande de véhicule (48) étant éventuellement équipées de systèmes de communication vidéo bidirectionnelle en temps réel propres à opérer par le biais de la liaison optique de données (24, 34).

22. Système selon la revendication 21, dans lequel le véhicule (22) est propre à être commandé depuis l'unité principale de commande à distance par le biais de la liaison optique de données (24, 34).
